# EUROPÄISCHE PATENTSCHRIFT

(11) **EP 1 004 102 B1**
(45) Veröffentlichungstag und Bekanntmachung des Hinweises auf die Patenterteilung: **19.12.2001**
(21) Anmeldenummer: 98941267.1
(22) Anmeldetag: 03.07.1998
(51) Int. Cl.: G07F 7/12, G07F 19/00

(54) **DATENTRÄGER ZUM SPEICHERN VON WERTEINHEITEN, AUFBUCHSTATION UND ABBUCHSTATION FÜR WERTEINHEITEN SOWIE ENTSPRECHENDE VERFAHREN ZUM AUFBUCHEN UND ABBUCHEN**
DATA CARRIER FOR STORING UNITS OF VALUE, CREDIT STATION AND DEBIT STATION FOR UNITS OF VALUE AND CORRESPONDING METHODS FOR CREDITING AND DEBITING
SUPPORT DE DONNEES POUR LE STOCKAGE D'UNITES DE VALEUR, STATION DE CREDIT ET STATION DE DEBIT POUR UNITES DE VALEUR, ET PROCEDES CORRESPONDANT DE CREDIT ET DE DEBIT

(30) Priorität: 12.08.1997 DE 19734926
(43) Veröffentlichungstag der Anmeldung: 31.05.2000
(73) Patentinhaber: Infineon Technologies AG, 81669 München (DE)
(72) Erfinder: POCKRANDT, Wolfgang, D-85293 Reichertshausen (DE)
(74) Vertreter: Fischer, Volker, Dipl.-Ing.
(86) Internationale Anmeldenummer: DE9801849
(87) Internationale Veröffentlichungsnummer: WO9908240

(56) Entgegenhaltungen:
- EP-A- 0 380 377
- EP-A- 0 621 570
- DE-A- 4 119 924

## Beschreibung

Die Erfindung betrifft einen Datenträger zum Speichern von durch eine Aufbuchstation aufgebuchten Werteinheiten, die zum Abbuchen in wenigstens einer Abbuchstation vorgesehen sind. Außerdem betrifft sie eine entsprechende Aufbuchstation und eine entsprechende Abbuchstation. Weiterhin betrifft sie entsprechende Aufbuch- und Abbuchverfahren.

Bei einer Chipkarte handelt es sich um einen Datenträger, der als Speichermedium einen Halbleiterchip aufweist. Zukünftig werden zunehmend Chipkarten mit einer Geldbörsenfunktion zum Einsatz kommen. Bei diesen ist Geld in Form von Werteinheiten durch eine Aufbuchstation aufbuchbar, so daß die Chipkarte aufgeladen wird. Anschließend kann sie zum Zahlen an entsprechenden Abbuchstationen verwendet werden, wobei die Werteinheiten um den jeweils zutreffenden Betrag vermindert werden, also ein Abbuchen der Werteinheiten erfolgt. Als Aufbuchstation kommen hierbei Terminals in Betracht, die ähnlich wie herkömmliche Geldautomaten gestaltet sind. Als Abbuchstationen kann es sich beispielsweise um Kassenautomaten in Einkaufsgeschäften handeln.

Da die auf der Chipkarte gespeicherten Werteinheiten Geldbeträgen entsprechen, ist es notwendig, einen Mißbrauch auszuschließen. Um eine gewisse Sicherheit zu gewährleisten, ist es üblich, bei Geldkarten eine gegenseitige Authentifikation zwischen Karte und der Aufbuchstation einerseits und andererseits zwischen Karte und Abbuchstation durchzuführen.

Dazu ist beispielsweise aus der DE-A-41 19 924 bekannt, ein Guthaben durch ein Zertifikat zu sichern um so zu erreichen, daß nur einander bekannte Kommunikationspartner Daten austauschen können. Durch das Zertifikat kann zum Beispiel auch sichergestellt werden, daß durch eine Abbuchstation keine Beträge aufgebucht werden können. Durch manipulierte Aufbuchstationen bleibt jedoch zumindest in Verbindung mit manipulierten Datenträgern eine Gefahr des Mißbrauchs bestehen.

Der Erfindung liegt die Aufgabe zugrunde, einen Mißbrauch des beschriebenen Geldkartensystems weiter zu erschweren.

Diese Aufgabe wird mit einem Datenträger gemäß Anspruch 1, einer Abbuchstation gemäß Anspruch 6, einem Aufbuchverfahren gemäß Anspruch 9 sowie einem Abbuchverfahren gemäß Anspruch 10 gelöst.

Beim erfindungsgemäßen Datenträger ist nach der Durchführung eines Aufbuchvorgangs in einer Aufbuchstation eine Identifikationsnummer der Aufbuchstation gespeichert, die der Datenträger bei einem Abbuchvorgang der Werteinheiten an eine Abbuchstation übermittelt. Der Datenträger, beispielsweise eine Chipkarte, weist zum Speichern der Identifikationsnummer der Aufbuchstation einen entsprechenden Speicher auf, der entweder Teil eines größeren Speichers ist, in dem beispielsweise auch die Werteinheiten gespeichert werden, oder ein separater Speicher, beispielsweise ein Register.

Das Speichern der Identifikationsnummer der Aufbuchstation wenigstens bis zu dem Zeitpunkt, bis zu dem ein Abbuchen der Werteinheiten erfolgt, hat den Vorteil, daß durch die Abbuchstation überprüfbar ist, ob das Aufbuchen durch eine zugelassene Aufbuchstation erfolgte. Insbesondere wird durch die Erfindung ermöglicht, eine als gestohlen gemeldete (also nicht mehr zugelassene) Aufbuchstation zu sperren, wobei die Abbuchstation über eine Liste der gesperrten Aufbuchstationen verfügt. Beim Lesen der Identifikationsnummer der Aufbuchstation während des Abbuchvorgangs erkennt die Abbuchstation dann, ob die entsprechende Aufbuchstation als gestohlen und damit als gesperrt gemeldet worden ist. Es erfolgt dann kein Abbuchen der Werteinheiten und die Karte kann darüber hinaus beispielsweise durch die Abbuchstation eingezogen werden.

Eine Weiterbildung der Erfindung sieht vor, daß die Identifikationsnummer der Aufbuchstation auf dem Datenträger sowohl in unverschlüsselter als auch in durch die Aufbuchstation verschlüsselter Form gespeichert ist. Dies hat den Vorteil, daß die unverschlüsselte und die verschlüsselte Identifikationsnummer durch die Abbuchstation von dem Datenträger gelesen werden können. Verfügt dann die Abbuchstation über denselben Verschlüsselungsalgorithmus wie denjenigen, den die Aufbuchstation zur Verschlüsselung der Identifikationsnummer benutzt hat, kann die Abbuchstation die unverschlüsselte Identifikationsnummer der Aufbuchstation auf dieselbe Weise verschlüsseln wie die Aufbuchstation. Anschließend erfolgt ein Vergleich der durch die Aufbuchstation verschlüsselten Identifikationsnummer der Aufbuchstation und der durch die Abbuchstation verschlüsselten Identifikationsnummer der Aufbuchstation. Weichen beide trotz des Einsatzes desselben Verschlüsselungsalgorithmus voneinander ab, steht fest, daß es sich bei der unverschlüsselt auf dem Datenträger gespeicherten Identifikationsnummer der Aufbuchstation um einen gefälschten Wert handelt. Als Folge dessen findet kein Abbuchen der Werteinheiten statt. Die Karte kann, wie bereits erwähnt, bei Feststellung einer Aufbuchung durch eine nicht zugelassenen Aufbuchstation von der Abbuchstation einbehalten werde.

Eine Weiterbildung der Erfindung sieht vor, daß auf dem Datenträger auch das Datum und gegebenenfalls die Uhrzeit des Aufbuchvorgangs gespeichert sind. Dies bietet den Vorteil, daß durch die Abbuchstation feststellbar ist, ob die Werteinheiten vor oder nach einem gemeldeten Diebstahl der Aufbuchstation auf dem Datenträger gespeichert worden sind. Somit kann eine genauere Unterscheidung getroffen werden, ob der Datenträger zu sperren ist, oder ob ein Abbuchen der Werteinheiten erfolgen darf.

Nach einer Weiterbildung der Erfindung sind auch das Datum und gegebenenfalls die Uhrzeit sowohl unverschlüsselt als auch in durch die Aufbuchstation verschlüsselter Form auf dem Datenträger gespeichert. Dies hat ebenso wie beim unverschlüsselten und verschlüsselten Speichern der Identifikationsnummer der Aufbuchstation, die weiter oben erläutert wurde, den Vorteil, daß eine Fälschung des gespeicherten Datums bzw. der Uhrzeit durch die Abbuchstation in analoger Weise feststellbar ist.

Die Aufbuchstation weist eine in ihr gespeicherte Identifikationsnummer auf, die sie bei einem Aufbuchvorgang von Werteinheiten auf den Datenträger auf diesem speichert, wobei die gespeicherte Identifikationsnummer für ein späteres Auslesen durch eine Abbuchstation während eines Abbuchvorganges der Werteinheiten vorgesehen ist.

Die erfindungsgemäße Abbuchstation liest bei einem Abbuchvorgang vom Datenträger die dort gespeicherte Identifikationsnummer einer Aufbuchstation, die die Werteinheiten auf den Datenträger aufgebucht hat und überprüft auf die oben geschilderte Art (beispielsweise anhand einer Liste), ob die ausgelesene Identifikationsnummer einer zugelassenen Aufbuchstation zugeordnet ist oder nicht.

Das erfindungsgemäße Aufbuchverfahren und das erfindungsgemäße Abbuchverfahren betreffen die mit dem erfindungsgemäßen Datenträger durchführbaren Verfahren.

Die Erfindung wird im folgenden anhand der Figuren erläutert. Es zeigen:
- Figur 1: einen erfindungsgemäßen Datenträger in Form einer Chipkarte sowie eine Aufbuchstation bei der Durchführung eines erfindungsgemäßen Aufbuchvorgangs,
- Figur 2: den Datenträger aus Figur 1 sowie eine erfindungsgemäße Abbuchstation bei der Durchführung eines erfindungsgemäßen Abbuchverfahrens.

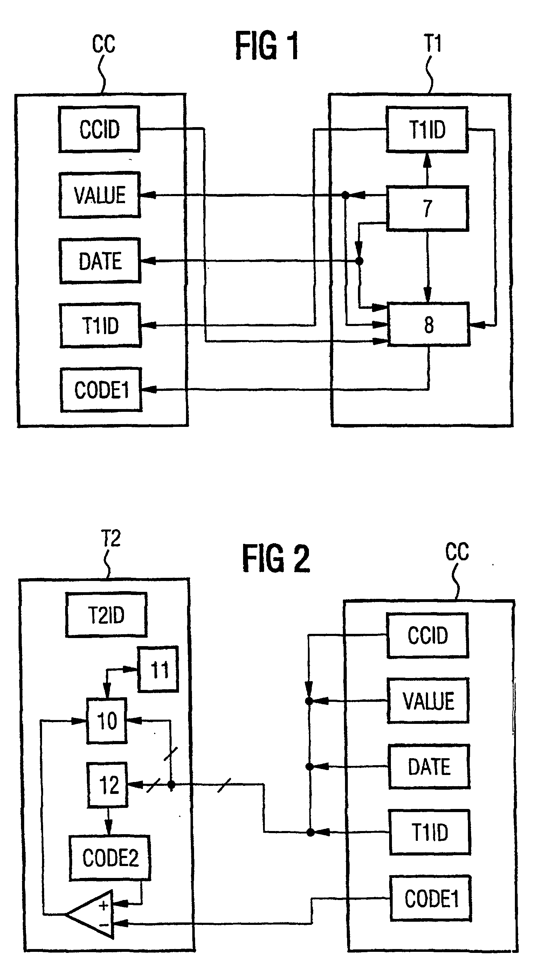

Figur 1 zeigt einen Datenträger CC in Form einer Chipkarte und eine Aufbuchstation T1 bei einem Aufbuchvorgang von auf dem Datenträger CC zu speichernden Werteinheiten VALUE. Zu Beginn des Aufbuchvorgangs findet zunächst eine gegenseitige Authentifikation zwischen Datenträger CC und Aufbuchstation T1 statt. Da eine solche Authentifikation dem Fachmann bekannt ist, wird hierauf nicht weiter eingegangen.

Im Datenträger CC ist eine Identifikationsnummer CCID und in der Aufbuchstation T1 eine Identifikationsnummer T1ID dauerhaft gespeichert. Die Aufbuchstation T1 weist eine Steuereinheit 7 auf, die zur Steuerung der im folgenden erläuterten Vorgänge dient. Sie kann beispielsweise ein Mikroprozessor oder Mikrocontroller sein. Weiterhin weist die Aufbuchstation T1 eine Verschlüsselungseinrichtung 8 auf, die auch Bestandteil der Steuereinheit 7 sein kann und auf deren Funktion weiter unten noch eingegangen wird.

Die Steuereinheit 7 bucht, nachdem sie anhand der Identifikationsnummer CCID des Datenträgers CC erkannt hat, daß es sich um einen zugelassenen Datenträger handelt, die Werteinheiten VALUE auf den Datenträger CC. Außerdem ist es bei diesem Ausführungsbeispiel vorgesehen, daß die Steuereinheit 7 das Datum DATE und die Uhrzeit des Aufbuchvorgangs sowie die Identifikationsnummer T1ID der Aufbuchstation T1 auf dem Datenträger CC speichert. Weiterhin veranlaßt die Steuereinheit 7 die Verschlüsselungseinrichtung 8, eine Verschlüsselung vorzunehmen, deren Eingangsgrößen die Identifikationsnummer CCID des Datenträgers CC, die Identifikationsnummer T1ID der Aufbuchstation T1, das Datum DATE und die Uhrzeit des Aufbuchvorgangs sowie der Wert der aufzubuchenden Werteinheiten VALUE ist. Die Verschlüsselungseinrichtung 8 führt die Verschlüsselung mittels eines geheimen, in der Aufbuchstation T1 gespeicherten Algorithmus durch. Das Ergebnis CODE1 des Verschlüsselungsvorgangs wird ebenfalls auf dem Datenträger CC gespeichert.

Es versteht sich von selbst, daß zum Speichern der Identifikationsnummern CCID, T1ID, der Werteinheiten VALUE, des Datums DATE bzw. der Uhrzeit sowie des Ergebnisses CODE1 der beschriebenen Verschlüsselung entsprechende Speicher auf dem Datenträger CC vorhanden sein müssen. Dies kann beispielsweise ein einziger gemeinsamer größerer Speicher sein, indem all diese Informationen abgelegt werden, oder es können jeweils einzelne kleinere Speicher oder Register zum Speichern vorgesehen sein.

Wichtig ist, daß die Identifikationsnummer T1ID der Aufbuchstation T1 nach dem Aufbuchvorgang dauerhaft auf dem Datenträger CC gespeichert bleibt. Sie dient dort zur Verwendung während eines anhand Figur 2 noch zu erläuternden Abbuchvorgang der Werteinheiten VALUE.

Figur 2 zeigt den Datenträger CC aus Figur 1 und eine Abbuchstation T2 bei der Durchführung eines erfindungsgemäßen Abbuchungsvorgangs. Der Datenträger CC enthält die gespeicherten Werte, die während des anhand Figur 1 beschriebenen Aufbuchungsvorgangs durch die Aufbuchstation T1 auf ihm gespeichert wurden.

Zur Einleitung des Abbuchungsvorgangs findet zunächst wieder eine hier nicht näher erläuterte Authentifizierung zwischen Datenträger CC und Abbuchstation T2 statt, wobei die Identifikationsnummer CCID des Datenträgers CC an die Abbuchstation T2 und eine Identifikationsnummer T2ID der Abbuchstation T2 an den Datenträger CC übermittelt und jeweils verifiziert wird. Diese gegenseitige Authentifizierung ist ebenso wie die Authentifizierung zu Beginn des Aufbuchvorgangs in Figur 1 nicht entscheidend für die Erfindung und deren Verständnis.

Vor einem Abbuchen der auf dem Datenträger CC gespeicherten Werteinheiten VALUE übermittelt der Datenträger CC die auf ihm gespeicherte (unverschlüsselte) Identifikationsnummer T1ID der Aufbuchstation T1 aus Figur 1, die das Auf buchen der Werteinheiten VALUE durchgeführt hat, an eine Steuereinheit 10 der Abbuchstation T2. Diese hat Zugriff auf eine Liste 11, die die Identifikationsnummern von nicht zugelassenen bzw. gesperrten Aufbuchstationen enthält. Durch Vergleich mit dieser Liste 11 stellt die Abbuchstation T2 fest, ob die Identifikationsnummer T1ID der Aufbuchstation T1 einer zulässigen Aufbuchstation zugeordnet ist oder nicht. Ist dies nicht der Fall, wird der Abbuchungsvorgang abgebrochen und es erfolgt keine Abbuchung der Werteinheiten VALUE. Die Liste 11 enthält bei diesem Ausführungsbeispiel die Identifikationsnummern von als gestohlen gemeldeten Aufbuchstationen. Es können auch andere Kriterien für die Nichtzulassung einer Aufbuchstation bestimmt werden.

Auf die geschilderte Weise ist es möglich, zu verhindern, daß Datenträger CC mit einer als gestohlen gemeldeten Aufbuchstation T1 aufgeladen und anschließend zu Zahlungen verwendet werden.

Die Liste 11 mit den nicht zugelassenen bzw. als gestohlen gemeldeten Aufbuchstationen kann entweder, wie in Figur 2 gezeigt, in der Abbuchstation T2 gespeichert sein oder von dieser über einen entsprechenden Datenanschluß von einem zentralen Speicher, auf den zahlreiche Abbuchstationen gleichzeitig Zugriff haben, gelesen werden. Wichtig ist, daß die Liste 11 möglichst aktuelle Einträge enthält.

Stellt die Abbuchstation T2 fest, daß sich die Identifikationsnummer T1ID der Aufbuchstation T1 auf der Liste 11 der gesperrten (also nicht zugelassenen) Aufbuchstationen befindet, liest sie auch noch das Datum DATE und die Uhrzeit des Aufbuchvorgangs, welches auf dem Datenträger CC gespeichert ist und überprüft anhand weiterer Einträge der Liste 11, ob der Aufbuchvorgang vor oder nach einem gemeldeten Diebstahl der Aufbuchstation T1 erfolgt ist. Geschah der Aufbuchvorgang vor dem Diebstahl der Aufbuchstation T1, wird der Datenträger CC als "gut" erkannt, ist dies nicht der Fall, wird der Abbuchungsvorgang abgebrochen und es erfolgt kein Abbuchen der Werteinheiten VALUE.

Ergibt der Vergleich mit dem Inhalt der Liste 11, daß sich die Identifikationsnummer T1ID der Aufbuchstation T1 nicht auf dieser befindet, erfolgt durch die Abbuchstation T2 noch eine Überprüfung, ob es sich bei der Identifikationsnummer T1ID der Aufbuchstation T1 um eine Fälschung handelt. Dies geschieht auf folgende Weise:

Die Abbuchstation T2 weist eine Verschlüsselungseinheit 12 auf, die denselben geheimen Algorithmus enthält wie die Verschlüsselungseinheit 8 der Aufbuchstation T1 aus Figur 1. Der Datenträger CC übermittelt nun dieselben Werte, die der bezüglich Figur 1 beschriebenen Verschlüsselung zugrunde lagen, nämlich seine Identifikationsnummer CCID, den Wert der Werteinheiten VALUE, das Datum DATE und die Uhrzeit des Aufbuchvorgangs sowie die auf ihm gespeicherte Identifikationsnummer T1ID der Aufbuchstation T1 aus Figur 1 an die Abbuchstation T2. Die Verschlüsselungseinrichtung 12 der Abbuchstation T2 führt mit dem Verschlüsselungsalgorithmus eine Verschlüsselung durch, deren Ergebnis CODE2 mit dem ebenfalls vom Datenträger CC zur Abbuchstation T2 übermittelten Ergebnis CODE1 des durch die Aufbuchstation T1 durchgeführten Verschlüsselungsvorgangs verglichen wird. Hierzu weist die Abbuchstation T2 eine Vergleichseinrichtung 14 auf, deren Ergebnissignal an eine Steuereinheit 10 (z.B. ein Mikroprozessor, deren Bestandteil die Verschlüsselungseinheit 12 sein kann) der Abbuchstation T2 übermittelt wird. Ergibt der Vergleich der Verschlüsselungsergebnisse CODE1, CODE2, daß beide nicht übereinstimmen, so steht mit Sicherheit fest, daß einer der vom Datenträger CC an die Abbuchstation T2 übermittelten Werte gefälscht ist. Dies erkennt die Abbuchstation T2 und unterbindet ein Abbuchen der Werteinheiten VALUE vom Datenträger CC.

Bei den geschilderten Ausführungsbeispielen gemäß Figur 1 und Figur 2 erfolgt eine Verschlüsselung sowohl der Identifikationsnummer CCID des Datenträgers CC als auch der Identifikationsnummer T1ID der Aufbuchstation T1, als auch des Wertes der Werteinheiten VALUE als auch des Datums DATE und der Uhrzeit der Durchführung der Aufbuchung mittels eines gemeinsamen Algorithmus, der nur ein gemeinsames verschlüsseltes Ergebnis CODE1, CODE2 generiert. Bei anderen Ausführungsbeispielen der Erfindung können einzelne oder alle dieser Daten auch jeweils einzeln verschlüsselt werden (evt. unter Einsatz jeweils verschiedener Verschlüsselungsalgorithmen), wobei jedes dieser Verschlüsselungsergebnisse auf dem Datenträger CC zu speichern ist. Die Wiederholung bzw. das Nachvollziehen der Verschlüsselung durch die Abbuchstation T2 beim Abbuchvorgang zur Verifizierung der auf dem Datenträger CC gespeicherten Daten muß dann analog für jede der einzelnen Verschlüsselungen separat nachvollzogen werden. Außerdem ist es möglich, daß nur ein Teil der bei den geschilderten Ausführungsbeispielen verschlüsselten Daten verschlüsselt wird. Diesw hat aber jeweils eine Verschlechterung der Sicherheit zur Folge, da dann nicht mehr überprüfbar ist, ob die auf dem Datenträger CC gespeicherten unverschlüsselten Werte nicht gefälscht worden sind.

Die Erfindung ermöglicht eine vorteilhafte Absicherung der Wertübertragung beim elektronischen Zahlungsverkehr.

Weiterhin kann in Weiterbildung der geschilderten Ausführungsbeispiele vorgesehen sein, nicht direkt die Identifikationsnummer CCID des Datenträgers CC und die Identifikationsnummer T1ID der Aufbuchstation T1 als Eingangsgrößen der Verschlüsselung zu wählen, sondern diese zuvor nochmals mittels eines geheimen Schlüssels zu verschlüsseln.

Wichtig für die Erfindung ist, daß der Datenträger CC (aufgrund der gespeicherten Identifikationsnummern CCID, T1ID in unverschlüsselter und verschlüsselter Form) nach dem Aufbuchvorgang einen eindeutig ihm und der Aufbuchstation T1 zugeordneten, verschlüsselten Datensatz in Form des Verschlüsselungsergebnisses CODE1 enthält.

## Patentansprüche

1. Datenträger (CC) zum Speichern von durch eine Aufbuchstation (T1) aufgebuchten Werteinheiten (VALUE), die zum Abbuchen in wenigstens einer Abbuchstation (T2) vorgesehen sind, auf dem nach dem Aufbuchen der Werteinheiten (VALUE) eine Identifikationsnummer (T1ID) der Aufbuchstation (T1) gespeichert ist, die er beim Abbuchen der Werteinheiten (VALUE) an die Abbuchstation (T2) übermittelt.

2. Datenträger nach Anspruch 1,
auf dem nach dem Aufbuchen der Werteinheiten (VALUE) die Identifikationsnummer (T1ID) der Aufbuchstation (T1) sowohl unverschlüsselt als auch in durch die Aufbuchstation (T1) verschlüsselter Form gespeichert ist.

3. Datenträger nach einem der vorstehenden Ansprüche,
auf dem nach dem Aufbuchen der Werteinheiten (VALUB) das Datum (DATE) und gegebenenfalls die Uhrzeit des Aufbuchvorgangs gespeichert ist.

4. Datenträger nach Anspruch 3,
auf dem das Datum (DATE) und gegebenenfalls die Uhrzeit sowohl unverschlüsselt als auch in durch die Aufbuchstation (T1) verschlüsselter Form gespeichert ist.

5. Datenträger nach einem der vorstehenden Ansprüche,
auf dem die Werteinheiten (VALUE) sowohl unverschlüsselt als auch in durch die Aufbuchstation (T1) verschlüsselter Form gespeichert sind.

6. Abbuchstation (T2) zum Abbuchen von auf einem Datenträger (CC) gespeicherten Werteinheiten (VALUE),
- die beim Abbuchen eine auf dem Datenträger (CC) gespeicherte Identifikationsnummer (T1ID) einer Aufbuchstation (T1) liest, die die Werteinheiten (VALUE) auf den Datenträger (CC) aufgebucht hat,
- und die überprüft, ob die Identifikationsnummer (T1ID) einer zugelassenen Aufbuchstation zugeordnet ist.

7. Abbuchstation nach Anspruch 6,
- die die vom Datenträger (CC) gelesene Identifikationsnummer (T1ID) verschlüsselt
- und die zur Authentifikation der Identifikationsnummer (T1ID) das Ergebnis (CODE2) der Verschlüsselung mit einem ebenfalls auf dem Datenträger (CC) gespeicherten Wert (CODE1) vergleicht.

8. Abbuchstation nach Anspruch 6 oder 7,
- die beim Abbuchen das Datum (DATE) und gegebenenfalls die Uhrzeit des Aufbuchens der Werteinheiten (VALUE) durch die Aufbuchstation vom Datenträger (CC) liest
- und die überprüft, ob Aufbuchungen durch die Aufbuchstation (T1) zu diesem Zeitpunkt noch zugelassen waren.

9. Verfahren zum Aufbuchen von Werteinheiten (VALUE) auf einen Datenträger (CC) durch eine Aufbuchstation (T1), bei dem von der Aufbuchstation (T1) für eine spätere Überprüfung durch eine Abbuchstation (T2) bei einem Abbuchen der Werteinheiten (VALUE) in einer Abbuchstation (T2) eine Identifikationsnummer (T1ID) der Aufbuchstation (T1) auf dem Datenträger (CC) gespeichert wird.

10. Verfahren zum Abbuchen von von einer Aufbuchstation (T1) gespeicherten Werteinheiten (VALUE) von einem Datenträger (CC),
- bei dem eine auf dem Datenträger (CC) gespeicherte Identifikationsnummer (T1ID) der Aufbuchstation (T1) von der Abbuchstation (T2) gelesen wird
- und bei dem von der Abbuchstation (T2) überprüft wird, ob die von dem Datenträger gelesene Identifikationsnummer (T1ID) einer zugelassenen Aufbuchstation (T2) zugeordnet ist.

11. Verfahren nach Anspruch 10, bei dem die Abbuchstation (T2) die vom Datenträger (CC) gelesene Identifikationsnummer (T1ID) verschlüsselt und einen Vergleich des Ergebnisses (CODE2) mit einem auf dem Datenträger (CC) gespeicherten Wert (CODE1) durchführt.

## Claims

1. Data medium (CC) for storing monetary units (VALUE) which are credited by a crediting station (T1) and are provided for debiting in at least one debiting station (T2), which data medium stores an identification number (T1ID) for the crediting station (T1) after the monetary units (VALUE) have been credited and transmits said identification number to the debiting station (T2) when the monetary units (VALUE) are debited.

2. Data medium according to Claim 1,
which, after the monetary units (VALUE) have been credited, stores the identification number (T1ID) of the crediting station (T1) both in unencrypted form and in a form encrypted by the crediting station (T1).

3. Data medium according to one of the preceding claims,
which, after the monetary units (VALUE) have been credited, stores the date (DATE) and possibly the time of the crediting operation.

4. Data medium according to Claim 3,
which stores the date (DATE) and possibly the time both in unencrypted form and in a form encrypted by the crediting station (T1).

5. Data medium according to one of the preceding claims,
which stores the monetary units (VALUE) both in unencrypted form and in a form encrypted by the crediting station (T1).

6. Debiting station (T2) for debiting monetary units (VALUE) stored on a data medium (CC),
- which, during debiting, reads an identification number (T1ID) stored on the data medium (CC) for a crediting station (T1) which has credited the monetary units (VALUE) onto the data medium (CC),
- and which checks whether the identification number (T1ID) is associated with an authorized crediting station.

7. Debiting station according to Claim 6,
- which encrypts the identification number (T1ID) read from the data medium (CC),
- and which, to authenticate the identification number (T1ID), compares the result (CODE2) of the encryption with a value (CODE1) which is likewise stored on the data medium (CC).

8. Debiting station according to Claim 6 or 7,
- which, during debiting, reads from the data medium (CC) the date (DATE) and possibly the time on/at which the monetary units (VALUE) were credited by the crediting station,
- and which checks whether crediting operations by the crediting station (T1) were still authorized at this time.

9. Method for a crediting station (T1) to credit monetary units (VALUE) onto a data medium (CC),
in which the crediting station (T1) stores an identification number (T1ID) for the crediting station (T1) on the data medium (CC) for the purposes of later checking by a debiting station (T2) when the monetary units (VALUE) are debited in a debiting station (T2).

10. Method for debiting monetary units (VALUE) stored by a crediting station (T1) from a data medium (CC),
- in which an identification number (T1ID) stored on the data medium (CC) for the crediting station (T1) is read by the debiting station (T2),
- and in which the debiting station (T2) checks whether the identification number (T1ID) read from the data medium is associated with an authorized crediting station (T2) [sic]).

11. Method according to Claim 10,
in which the debiting station (T2) encrypts the identification number (T1ID) read from the data medium (CC) and compares the result (CODE2) with a value (CODE1) stored on the data medium (CC).

## Revendications

1. Support (CC) de données pour le stockage d'unités (VALUE) de valeur créditées par un poste (T1) de crédit et destinées à être débitées dans au moins un poste (T2) de débit, sur lequel est mis en mémoire, après avoir crédité les unités (VALUE) de valeur, un numéro (T1ID) d'identification du poste (T1) de crédit, qu'il transmet au poste (T2) de débit lors du débit des unités (VALUE) de valeur.

2. Support de données suivant la revendication 1, sur lequel, après que les unités (VALUE) de valeur on été créditées, le numéro (T1ID) d'identification du poste (T1) de crédit est mis en mémoire à la fois sous une forme non codée et sous une forme codée par le poste (T1) de crédit.

3. Support de données suivant l'une des revendications précédentes, sur lequel, après que les unités (VALUE) de valeur ont été créditées, sont mises en mémoire la date (DATE) et éventuellement l'heure de l'opération de crédit.

4. Support de données suivant la revendication 3, sur lequel la date (DATE) et éventuellement l'heure sont mises en mémoire à la fois sous une forme non codée et sous une forme codée par le poste (T1) de crédit.

5. Support de données suivant l'une des revendications précédentes, sur lequel les unités (VALUE) de valeur sont stockées à la fois sous une forme non codée et sous une forme codée par le poste (T1) de crédit.

6. Poste (T2) de débit pour débiter des unités (VALUE) de valeur stockées sur un support (CC) de données,
- qui, lors du débit, lit un numéro (T1ID) d'identification, mis en mémoire sur le support (CC) de données, d'un poste (T1) de crédit qui a crédité les unités (VALUE) de valeur sur le support (CC) de données,
- et qui contrôle si le numéro (T1ID) d'identification est associé à un poste de crédit autorisé.

7. Poste de débit suivant la revendication 6,
- qui code le numéro (T1ID) d'identification lu sur le support (CC) de données,
- et qui, afin d'authentifier le numéro (T1ID) d'identification, compare le résultat (CODE2) du codage à une valeur (CODE1) également mis en mémoire sur le support (CC) de données.

8. Poste de débit suivant la revendication 6 ou 7,
- qui, lors du débit, lit sur le support (CC) de données la date (DATE) et éventuellement l'heure du crédit des unités (VALUE) de valeur par le poste de crédit,
- et qui contrôle si des crédits par le poste (T1) de crédit étaient encore autorisés à cet instant.

9. Procédé pour créditer des unités (VALUE) de valeur sur un support (CC) de données par un poste (T1) de crédit,
suivant lequel, en vue d'un contrôle ultérieur par un poste (T2) de débit lors d'un débit des unités (VALUE) de valeur dans un poste (T2) de débit, le poste (T1) de crédit met en mémoire sur le support (CC) de données un numéro (T1ID) d'identification du poste (T1) de crédit.

10. Procédé pour débiter d'un support (CC) de données des unités (VALUE) de valeur stockées par un poste (T1) de crédit,
- suivant lequel le poste (T2) de débit lit un numéro (T1ID) d'identification du poste (T1) de crédit qui est mis en mémoire sur le support (CC) de données,
- et suivant lequel le poste (T2) de débit contrôle si le numéro (T1ID) d'identification lu sur le support de données est associé à un poste (T1) de crédit autorisé.

11. Procédé suivant la revendication 10,
suivant lequel le poste (T2) de débit code le numéro (T1ID) d'identification lu sur le support (CC) de données, et effectue une comparaison du résultat (CODE2) avec une valeur (CODE1) mise en mémoire sur le support (CC) de données.
